# EUROPÄISCHE PATENTSCHRIFT

(11) **EP 1 990 471 B1**
(45) Veröffentlichungstag und Bekanntmachung des Hinweises auf die Patenterteilung: **03.07.2013**
(21) Anmeldenummer: 08008725.7
(22) Anmeldetag: 09.05.2008
(51) Int. Cl.: E01C 19/20, A01C 15/00

(54) **Steuvorrichtung zum gleichmäßigen Verteilen unterschiedlicher Streugüter**
Spreading device for the even distribution of different granular materials
Dispositif d'épandage pour la distribution uniforme des matériaux granulaires différents

(30) Priorität: 11.05.2007 DE 102007022067
(43) Veröffentlichungstag der Anmeldung: 12.11.2008
(73) Patentinhaber: RAUCH Landmaschinenfabrik GmbH, 76547 Sinzheim (DE)
(72) Erfinder: Zeitvogel, Thomas, 77836 Rheinmünster (DE); Knapp, Gerhard, 77889 Seeback (DE); Rauch, Norbert, 77815 Bühl (DE)
(74) Vertreter: Lasch, Hartmut

(56) Entgegenhaltungen:
- DE-A1- 2 003 976
- DE-A1- 3 917 448
- DE-A1- 19 813 980
- DE-B- 1 270 317
- DE-C1- 3 532 756
- FR-A- 1 230 486
- US-A- 3 041 076
- US-A- 3 767 126

## Beschreibung

Die Erfindung betrifft eine Streuvorrichtung mit einem von einem Rahmen getragenen Streugut-Behälter mit wenigstens einer bodenseitigen Dosieröffnung, einem deren freien Querschnitt steuernden Dosierschieber, wenigstens einer unterhalb des Bodens umlaufenden, von einer Welle angetriebenen Streuscheibe, die das Streugut zentrifugal beschleunigt und auf der zu bestreuenden Fläche gleichmäßig verteilt, wobei die Welle mit einem Wellenstumpf ein im Behälter angeordnetes, das Ausbringen des Streugutes unterstützendes Rührwerk mit einem Rührerstab antreibt, das mit einem Sockel mit einem rohrförmigen Unterteil den Wellenstumpf übergreift und mit diesem über eine Bajonettverbindung verbunden ist.

Die Erfindung befasst sich vornehmlich mit Streuvorrichtungen zum gleichmäßigen Verteilen von abstumpfenden oder auftauenden Winterdienststreumitteln auf Gehwegen und Verkehrsflächen, z. B. von Sand, Splitt, Salz oder Gemischen dieser Streustoffe bzw. zum Besanden von Rasenflächen. Da diese Streustoffe einerseits ein unterschiedliches Rieselverhalten zeigen, andererseits das Rieselverhalten und damit die Ausbringmöglichkeiten sehr stark vom Feuchtegehalt abhängig sind, müssen die den Streustoff bzw. das Streustoffgemisch lockernden Rührwerke an diese unterschiedlichen Anforderungen angepasst werden. Ferner ist den stark schleißenden Eigenschaften von Sand, insbesondere Splitt und den mechanisch oder chemisch korrodierenden Eigenschaften von Sand, Splitt und Salz Rechnung zu tragen.

Die Eigenschaften und das unterschiedliche Anforderungsprofil der verschiedenen Streustoffe lässt sich wie folgt zusammenfassen:

Auftauende Streustoffe, z.B. Salz verschiedener Provenienz und Mischung, sind in ihrer Effizienz unerreicht. Die früher vielfach beklagten Umweltschäden sind bei gesamtheitlicher Betrachtung relativ gering, sofern auf eine präzise Dosierung, insbesondere kleinerer Streumengen (< 30 g/m²) geachtet wird. Es entstehen keine zu reinigenden Reststoffe, die in die Kanalisation gelangen und/oder aufgesaugt und anschließend entsorgt werden müssen. Trockenes Salz zeigt eine gute Rieselfähigkeit und lässt sich einfach von Rührwerken auflockern und dosieren. Eine Brückenbildung tritt bei den für Streuvorrichtungen üblichen steilen Behälterwänden in der Regel nicht auf. Feuchtes oder gar nasses Salz hingegen ist schwierig zu handhaben. Aufgrund der Hygroskopie kommt dieser Zustand jedoch oft vor. Er führt zur Brückenbildung im Streugut-Behälter und zum Verschmieren der meist kleinen Dosierquerschnitte.

Feinkörniger Splitt ist als Streugut nach wie vor sehr verbreitet, obwohl die Effizienz sehr gering und entgegen verbreiteter Ansicht der Umweltschaden höher als angenommen ist. Der Verschleiß, insbesondere der Rührwerke und der bodennahen Teile des Behälters ist aufgrund des sehr harten und kantigen Materials sehr groß. Der gemahlene Splitt ist sehr fein, greift aggressiv Kunststoff- oder Kugel- oder Gleitlager und Dichtungen an und dringt in jede Ritze.

Splitt-Salzgemische sind dann erforderlich, wenn der nasse Splitt bei Minustemperaturen zum Anfrieren neigt. Dieses Gemisch ist schwierig aufzulockern und zu dosieren.

Sand ist als abstumpfender Streustoff oder auch zum Besanden von Rasenflächen in Gebrauch. In trockenem Zustand ist Sand mit trockenem Salz vergleichbar und zeigt deshalb ein gutes Rieselverhalten. Er lässt sich leicht lockern und dosieren, ist aber abrasiver als trockenes Salz. Der Einsatz für den Winterdienst geht eher zurück. Hingegen werden die eingangs genannten Streuvorrichtungen in zunehmendem Maße auch für die Besandung von Rasenflächen eingesetzt. Feuchter oder nasser Sand - aufgrund der üblichen Freilagerung ein oft anzutreffender Zustand - ist aufgrund der starken Neigung zur Brückenbildung sehr schwierig vom Rührwerk fließfähig zu halten und auszustreuen. Sand-Salzgemische verhalten sich ähnlich wie Sand alleine. Andere abstumpfende Streustoffe, wie Asche oder dergleichen, sind heute weniger oft anzutreffen und in der Regel mit den für die übrigen Streugüter angebotenen Rührwerken auszubringen.

Streuvorrichtungen gemäß der Erfindung für den Winterdienst gewinnen zunehmend an Bedeutung im Traktoranbau. Statt mit wenigen großen Lkw-Streuern und Schneepflügen zu versuchen, innerhalb kürzester Zeit alle Straßen und Wege in einer Region befahrbar bzw. begehbar zu halten, ist der Einsatz von mehreren kleinen Streuern im Traktoranbau schneller und effizienter. Die Kommunen oder andere für den Winderdienst Verpflichtete beauftragen häufig Lohnunternehmer oder Landwirte mit dieser Winterdienstaufgabe, die in der Regel ohnehin bereits für andere Arbeiten einen Traktor besitzen. Entweder stellen sie die Winterdienstausrüstung - Schneepflug und Anbaustreuer - zur Verfügung oder schließen entsprechende Verträge ab, aufgrund der sich der Lohnunternehmer oder Landwirt einen solchen Anbaustreuer selbst anschafft. Der Antrieb der Streuvorrichtung erfolgt dann in der Regel über die Zapfwelle des Traktors.

In einem weiteren Marktsegment werden gezogene Winterdienst-Streuvorrichtungen an Gabelstapler, Frontlader, Pkw mit Anhängerkupplung oder Klein-Lkw angekuppelt. Der Antrieb der Streuscheibe und des Rührwerks erfolgt dann in der Regel nur über die den Tragrahmen des Streugut-Behälters abstützenden Bodenräder.

Für das Ausbringen von Dünger oder Kalk, also einem etwas anderen Anwendungsgebiet als das, auf welches sich die Erfindung bezieht, ist es bekannt (GB 566 127) die Antriebswelle der Wurfscheibe durch den Boden des Behälters hindurchzuführen und mit dem Wellenstumpf über ein Kardangelenk ein Rührwerk mit einem Rührstab mit mehreren in unterschiedlicher Höhe angeordneten Rührflügeln zu verbinden. Am oberen Ende des Rührstabs ist eine Scheibe befestigt, die sich bei maximaler Auslenkung des Rührstabs um das Kardangelenk an die Behälterinnenwand anlegt, um eine Berührung der Rührflügel mit der Behälterwand zu vermeiden. Dieser Aufbau des Rührwerks trägt nicht den besonderen Eigenschaften und problematischen Aggregatzuständen von Winterdienst-Streu-stoffen Rechnung.

Für Sand, Salz und Splitt schlägt die DE 86 32 954 U1 ein im Behälter angeordnetes, nach unten geneigtes Schutzdach mit einem Gehäuse vor, in dem ein Hydraulikmotor zum Antrieb eines oberhalb des Bodens umlaufenden Kegels mit einem die im äußeren Bereich des Bodens angeordnete Dosieröffnung teilweise überstreichenden Rührfinger vor. Dieser Stand der Technik befasst sich weder mit Verschleißfragen, noch mit der Auflockerung des Streugutes innerhalb des Streugut-Behälters.

Die DE 198 13 980 A1 beschreibt einen Kleinstreuer für Winterdienst-Streustoffe. Die die Wurfscheibe antreibende Welle durchgreift eine in den Boden des Behälters eingesetzte Kunststoffhülse. Auf das Wellenende ist eine Scheibe mit zwei radialsymmetrischen, konzentrischen Bohrungen aufgeschraubt, in die jeweils ein gummielastischer Rührfinger mit seinem einen Ende formschlüssig eingesetzt und parallel zur Kunststoffhülse nach unten und nach außen radial abgebogen wird. Die horizontal liegenden Abschnitte der Rührfinger überstreichen den Boden und zwei in diesem angeordnete Dosieröffnungen, die vor allem durch einen seitlich nach außen geführten Dosierschieber gesteuert werden. Diese Streuvorrichtung soll zum Verteilen von Dünger, Saatgut und Winterdienst-Streustoffen dienen. Oberhalb der Scheibe mit den eingesetzten Rührfingern ist im Behälter ein Ablenkdach angeordnet, das den Streugutdruck auffangen soll. Die gummielastischen Rührfinger sind aufgrund ihres geringen Durchmessers und ihrer Länge zu nachgiebig, um problematisches Streugut, wie insbesondere Splitt und im feuchten Zustand backende oder schmierende Streustoffe im Bereich der Dosieröffnungen sicher und exakt dosiert auszubringen. Im Übrigen fehlt es an einem Rührwerk, das das Streugut innerhalb des Behälters lockert, in Bewegung hält und eine Brückenbildung im Behälter verhindert.

Dies wird bei einer bekannten Streuvorrichtung vermieden (US-A-3767126), bei der im Behälter ein Rührwerk über ein Kardangelenk angetrieben wird. An dem abtreibenden Teil des Kardangelenks ist ein Rührstab mit radial höhenversetzt angeordneten Rührfingern befestigt. Am oberen Ende des Rührstabes ist ein Anlaufring angeordnet. Die Lockerungswirkung auf das Streugut ist beschränkt. Gleiches gilt für eine andere bekannte Streuvorrichtung (FR-A-12304876) mit im Wesentlichen gleichen Aufbau. Hier ist im oberen Bereich des Rührstabs ein Anschlagring angeordnet, der die Schwenkbewegung des Rührstabs begrenzt.

Aus der Praxis sind zwei Ausführungen von Streuvorrichtungen bekannt, die sowohl als Anbaugeräte, als auch als Nachläufer einsetzbar sind. Im ersten Fall (Prospekt der Firma Rauch Landmaschinenfabrik GmbH - Druckvermerk S0 3 09.95 PN) ist der pyramidenstumpfförmige oder kegelige Streugut-Behälter auf einem Tragrahmen angeordnet, der beispielsweise von dem Dreipunktgestänge eines Traktors aufgenommen wird. Die Wurfscheibe ist über die Zapfwelle angetrieben und weist an ihrem äußeren Umfang eine Mehrzahl von Wurfflügeln auf. Die Antriebswelle der Wurfscheibe durchgreift ein am unteren Rand des Behälters lösbar angesetztes topfförmiges Bodenteil mit zwei Dosieröffnungen. Auf den in das Bodenteil hineinragenden Wellenstumpf ist ein Rührwerk mit Rührhaken für Sand, Salz, Sand-/Salzgemische über ein Kardangelenk und einen Bajonettverschluss angeschlossen, so dass sich der Rührstab des Rührwerks auch in Richtung der Wände des Behälters bewegen kann. Auf das obere Ende des Rührstabs ist eine ovale Hartgummischeibe aufgesetzt, die direkt an der Behälterwand anliegt. Durch die ovale Form der Hartgummischeibe wird einerseits vermieden, dass der Rührstab nur rotierend an einer Behälterstelle stehen bleibt, andererseits wird im Behälter eine größere Unruhe erzeugt. Allerdings wird der Lack im Behälter entlang der Bewegungsbahn der Hartgummischeibe auf Dauer abgetragen und ein Anrosten der Behälterwände ist unvermeidbar. Das topfförmige Bodenteil hat den Vorteil, dass in dem am stärksten beanspruchten Bereich, nämlich in Bodennähe, bei Verrosten bzw. Korrodieren das Bodenteil ausgewechselt werden kann. Aufgrund der seitlichen Lage der Öffnungen neben dem größten Radius des unteren Rührhakens ist dort auch bei kleinen Streumengen die höchste Umfangsgeschwindigkeit des Rührwerks. Dies führt leicht zum Verstopfen und Verschmieren der Dosieröffnungen, was durch einen kleinen Auswerfer am Ende des unteren Rührfingers zumindest etwas reduziert werden soll. Dies gelingt aber nur bedingt. Für Splitt und Dünger wird das zuvor beschriebene Rührwerk durch eine Rührhaube aus Stahl ersetzt, die zwar weniger als ein Stahlfinger verschleißt, da eine vorlaufende Kante, wie bei einem Rührhaken, nicht vorhanden ist, jedoch sind die in der Abdeckhaube ausgepressten Mitnehmer ebenfalls dem Verschleiß ausgesetzt.

Bei der anderen bekannten Ausführungsform (Prospekt der Firma Amazonen-Werke H. Dreyer GmbH & Co. KG - Druckvermerk: MI 739/D 610(D)02.06) sind wiederum verschiedene Rührwerke vorgesehen. Für Sand und Salz sind an einem Rührstab, der über ein Kardangelenk mit einem Sockel verbunden ist, der seinerseits über einen Bajonettverschluss mit dem unterhalb des Behälterbodens endenden Wellenstumpf verbunden ist, Rührhaken und Rührfinger angeordnet, so dass auch hier der Rührstab radial ausweichen kann. Im Bereich des Sockels unterhalb des Kardangelenks sind zwei Rührflügel angeordnet, die über den im Wesentlichen ebenen Boden bzw. die darin angeordnete Dosieröffnung streichen. In mittlerer Behälterhöhe ist ein im Wesentlichen ovaler Anlaufring über Distanzlaschen an der Innenseite der Behälterwände befestigt. An dem Anlaufring liegt der Rührstab im Bereich zwischen zwei Rührfingern an. Da der Rührstab Kreisquerschnitt aufweist, neigt er leicht zum Drehen um sich selbst, ohne sich an der Innenseite des Anlaufrings fortzubewegen. Der Vorteil ist allerdings darin zu sehen, dass die Behälterwände nicht von Teilen des Rührwerks direkt berührt werden, dort also kein Lackabtrag und Korrosion eintritt. Dieses Rührwerk ist jedoch nur für die Streustoffe Sand und Salz geeignet. Für Splitt und Splitt-Salzgemische ist ein eigenes Rührwerk vorgesehen, das wiederum über einen Sockel und einen Bajonettverschluss mit dem Wellenstumpf verbindbar ist. Der Sockel weist eine Scheibe auf, die mit einem angeformten Rührorgan versehen ist und auf die ein Rohrstab aufgeschweißt ist, der in unterschiedlichem Höhenabstand mit angeschweißten Ösen versehen ist, an die Ketten mit Zentrifugalgewichten angeschlossen sind. Bei Verschleiß oder Brechen eines der Kettenglieder fliegen die Zentrifugalgewichte unkontrolliert in den Behälter. Das gesamte Rührwerk muss beim Wechseln von Splitt bzw. Splitt-Salzgemischen auf Sand und/oder Salz gegen das zuvor beschriebene Rührwerk ausgetauscht werden. Im Übrigen besteht es komplett aus lackiertem Stahl und verschleißt und korrodiert deshalb. Eine einfachste Ausführung des Rührkopfs für granulierten Dünger besteht aus dem beschriebenen Sockel mit der oberen Scheibe und dem angeformten Rührfinger. Auch dieser Rührkopf besteht vollständig aus Stahl. Der im Wesentlichen ebene Boden ist von unten an die Öffnung des Behälters angesetzt. Die bodennahen Innenwände des Behälters werden durch die Rührbewegung stark beansprucht, so dass die Farbe abgetragen wird und der Behälter im unteren Bereich bis zur Unbrauchbarkeit korrodiert und durchrostet. Dadurch, dass die verschiedenen Rührwerke vollständig aus Stahl bzw. Guss bestehen, wird auch das partikelförmige Streugut mechanisch zu stark beansprucht und zerkleinert, so dass sich Feinpartikel und Staub bilden, die zu einem schlechten Dosierergebnis führen.

Ausgehend von dem die Merkmale des Oberbegriffs des Anspruchs 1 bildenden, zuletzt genannten Stand der Technik sollen die zuvor geschilderten Probleme an Rührwerken bzw. durch diese verursachten Verschleißprobleme gelöst werden. Es sollen die Anzahl der verschiedenen Rührwerke für die verschiedenen Streustoffe reduziert, die Anschaffungskosten für die Rührwerke für den Kunden gesenkt, der Verschleiß am Rührwerk und an Behälterteilen, z.B. Behälterboden und -wände, weitgehend vermieden sowie die Funktion durch Vermeidung von Brückenbildung oder Verstopfungen der Dosieröffnungen verbessert werden.

Diese Aufgabe wird bei einer Streuvorrichtung nach dem Oberbegriff des Anspruchs 1 durch dessen kennzeichnende Merkmale gelöst.

Danach ist vorgesehen, dass am Rührstab ein ovalförmiger Wälzkörper angeordnet ist, der sich bei Umlauf des Rührstabs an der Innenseite des Anlaufrings abwälzt und über diesen auf die Wände des Behälters einwirkt.

Bei Umlauf des Rührstabs wälzt sich der ovalförmige Wälzkörper entsprechend der Drehbewegung des Rührstabs um dessen Drehachse an der Innenseite des Anlaufrings ab und führt dabei heftige Spring- bzw. Klopfbewegungen aus, die auf die Behälterwände indirekt einwirken.

Der ovalförmige Wälzkörper ist vorzugsweise im Bereich seiner einen kurzen Achse mit dem Rührstab verbunden und gerät beim Abwälzen auf dem Anlaufring je nach den kinematischen Verhältnissen und dem Streustoffstand im Behälter ins Springen. Die dabei auf den Anlaufring wirkenden Kräfte werden über Distanzlaschen als Klopfkräfte auf die Behälterwände übertragen, so dass der Streustoff auch im wandnahen Bereich ins Rutschen kommt.

Vorteilhafterweise ist der Anlaufring ein polygonaler, vorzugsweise ein oktogonaler Ring, der eine springende Bewegung des Wälzkörpers begünstigt.

Der ovalförmige Wälzkörper ist vorzugsweise aus einem elastischen, Federeigenschaft aufweisenden Kunststoff gebildet, um einerseits ein weiches Abrollen bzw. Abwälzen am Anlaufring zu ermöglichen und dort insbesondere keinen Verschleiß entstehen zu lassen, andererseits ein Springen von einer Seite zur gegenüberliegenden Seite und ein heftiges Klopfen zu ermöglichen. Bei gänzlich vollem Behälter stellt sich der Rührstab in der Regel in der Mitte ein. Nach dem Freiräumen des zentralen Bereichs des Streugutstandes im Behälter legt sich der Rührstab mit seinem ovalen Wälzkörper an dem Anlaufring an und wälzt sich daran ab. Sobald der Behälter leerer wird und für den Rührstab Bewegungsfreiheit entsteht, schlägt der Rührstab durch die Federeigenschaft des Wälzkörpers auf dem Anlaufring hin und her und bringt Klopfkräfte auf die Behälterwand zur Wirkung, was den wandnahen Streustoff zum Boden leitet, ohne dass es zu einem Verschleiß an den Behälterwänden kommt.

Zweckmäßigerweise ist oberhalb des Wälzkörpers ein weiterer sich etwa radial erstreckender Rührfinger angeordnet, der auf das Streugut oberhalb des Anlaufrings bei der Rührwerksbewegung agiert.

Vorzugsweise ist wenigstens einer der Rührfinger an seinem Ende zu einem Haken abgebogen, weiterhin bevorzugt sind jedoch insgesamt vier Rührfinger in unterschiedlicher Höhe des Rührwerks vorgesehen, von denen wenigstens drei nach unten abgebogene Enden aufweisen.

Nachstehend ist die Erfindung anhand einer in der Zeichnung wiedergegebenen Ausführungsbeispiels beschrieben. In der Zeichnung zeigen:
- Fig. 1: eine isometrische Draufsicht auf den Behälter mit dem Rührwerk;
- Fig. 2: einen Axialschnitt durch den Behälter und das Rührwerk;
- Fig. 3: eine vergrößerte Ansicht des Details "A" in Fig. 2;

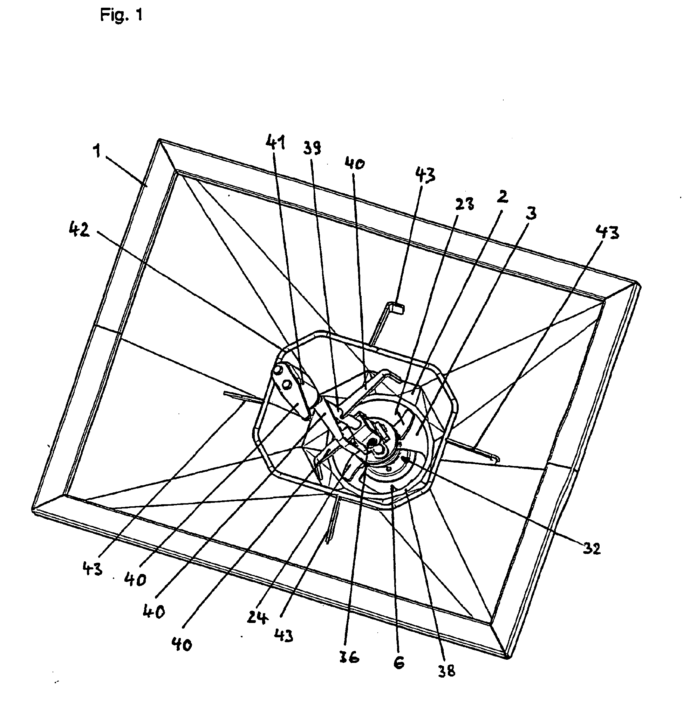

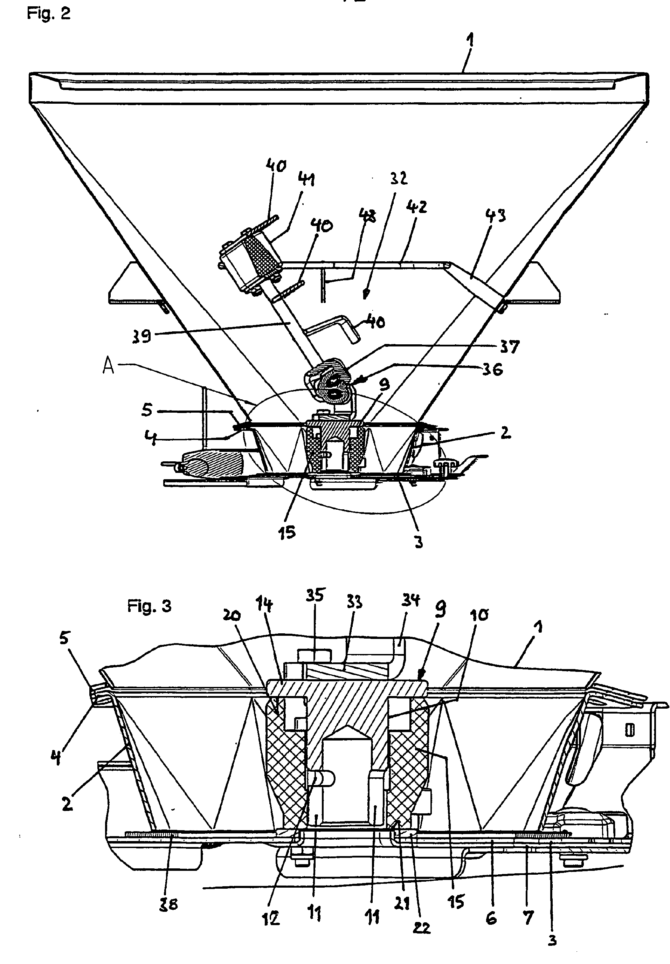

In Fig. 1 ist der Streugut-Behälter 1 erkennbar, der in dieser Ausführungsform als pyramidenstumpfförmiger Korpus mit abgeflachten Ecken ausgebildet ist und an seinem unteren Ende in ein topfförmiges Bodenteil übergeht, das an seinem unteren Ende durch einen etwa kreisförmigen Bodenring 38 ausgesteift ist. Das topfförmige Bodenteil 2 weist an seinem oberen Rand ebenso wie der Behälter 1 in seinem unteren Bereich nach außen weisende Flansche 4, 5 (siehe Fig. 2 und 3) auf, über die das Bodenteil 2 mittels Schrauben am Behälter 1 auswechselbar befestigt ist. Unterhalb des Bodenrings 38 ist der eigentliche Boden 3 mit der Dosieröffnung 6 (Fig. 1 und 3) angeordnet, deren Dosierquerschnitt mittels eines Dosierschiebers 7 einstellbar ist, wobei der Öffnungsquerschnitt von innen nach außen aufsteuerbar ist.

Unterhalb des Streugutbehälters und achsfluchtend mit diesem ist eine Streuscheibe angeordnet, die in der Zeichnung - weil bekannt - nicht gezeigt ist. Diese Streuscheibe wird bei einem Anbaugerät von der Zapfwelle des Traktors, bei einem Nachläufer von den Bodenrädern der Streuvorrichtung angetrieben. Die Antriebswelle der Streuscheibe kann mit einem Wellenstumpf den Boden des Behälters 1 durchgreifen. Mit dem Wellenstumpf ist über einen Bajonettverschluss ein Sockel 9 lösbar verbunden, der ein rohrförmiges Unterteil 10 mit den achsparallelen Einführungsschlitzen 11 und dem Umfangsschlitz 12 für einen am Wellenstumpf 8 quer angeordneten Hülsenstift versehen ist. Der Sockel 9 weist als oberen Abschluss eine das rohrförmige Unterteil 10 allseits überragende Scheibe 14 auf. Auf dem rohrförmigen Unterteil 10 des Sockels 9 ist ein Außenkörper 15 aus einem korrosions- und abriebfesten, gummielastischen Kunststoff drehfest, mit geringem axialen Spiel angeordnet.

Der Außenkörper 15 liegt mit seiner oberen Stirnseite 20 der Unterseite der Scheibe 14 des Sockels 9 und mit seiner unteren Stirnseite 21 einer Anlaufscheibe 22 am Boden des Behälters an.

Zur Lockerung des Streustoffs innerhalb des Behälters 1 und oberhalb des Bodens 2 ist ein Rührwerk 32 (Fig. 1, 2) vorgesehen, das eine Grundplatte 33 mit einer Gabel 34 aufweist, die mittels Schrauben 35 mit der Scheibe 14 des Sockels 9 lösbar verbunden ist. Die Gabel 34 bildet einen Teil eines Kardangelenks 36, an dessen angelenktem Teil 37 ein Rührstab 38 befestigt ist. Der Rührstab 38 weist mehrere, bei dem in Fig. 1 gezeigten Ausbildungsbeispiel vier radial abstehende Rührfinger 40 mit nach unten abgebogenen Enden auf, die in unterschiedlicher Höhe des Behälters umlaufen. Unterhalb des obersten Rührfingers 40 ist am Rührstab 39 ein ovaler Wälzkörper 41 aus einem federelastischen Kunststoff befestigt, der, wie die Rührfinger 40, bei Umlauf des Rührstabs 39 eine Dreh- und Taumelbewegung ausführt.

In etwa halber Höhe des Behälters 1 ist ein Anlaufring 42 angeordnet, der beim gezeigten Ausführungsbeispiel über Distanzlaschen 43 mit Abstand an den Wänden des Behälters 1 befestigt ist. Bei Umlauf des Kardangelenks 36 mit dem Rührstab 39 wird zunächst das Zentrum des Behälters freigeräumt, bis der Wälzkörper 41 am Anlaufring 42 entlang läuft. Er überträgt durch seine ovale Form und die Dreh-und Taumelbewegung Schwing- und Klopfkräfte auf die Behälterwand und springt aufgrund seiner Federeigenschaft hin und her. Auf diese Weise wird einer Brückenbildung beim Ausbringen des Streustoffs vorgebeugt und der Streustoff im wandnahen Bereich wirkungsvoll in Richtung Behälterboden geleitet.

## Patentansprüche

1. Streuvorrichtung mit einem von einem Rahmen getragenen Streugut-Behälter (1) mit wenigstens einer bodenseitigen Dosieröffnung (6), einem deren freien Querschnitt steuernden Dosierschieber (7), wenigstens einer unterhalb des Bodens (3) umlaufenden, von einer Welle angetriebenen Streuscheibe, die das Streugut zentrifugal beschleunigt und auf der zu bestreuenden Fläche gleichmäßig verteilt, wobei die Welle mit einem Wellenstumpf (8) ein im Behälter angeordnetes, das Ausbringen des Streugutes unterstützendes Rührwerk (32) mit einem Rührstab antreibt, das mit einem Sockel (9) mit einem rohrförmigen Unterteil (10) den Wellenstumpf (8) übergreift und mit diesem über eine Bajonettverbindung (11, 12) verbunden ist, **dadurch gekennzeichnet, dass** im Behälter (1) in etwa mittlerer Höhe ein Anlaufring (42) angeordnet ist, und am Rührstab (39) ein ovalförmiger Wälzkörper (41) angeordnet ist, der sich bei Umlauf des Rührstabs (39) an der Innenseite des Anlaufrings (42) abwälzt und über diesen auf die Wände des Behälters (1) einwirkt.

2. Streuvorrichtung nach Anspruch 1, **dadurch gekennzeichnet, dass** der Anlaufring (42) ein polygonaler, vorzugsweise oktogonaler Ring ist.

3. Streuvorrichtung nach Anspruch 1, **dadurch gekennzeichnet, dass** der ovalförmige Wälzkörper (41) aus einem elastischen, Federeigenschaften aufweisenden Kunststoff gebildet ist.

4. Streuvorrichtung nach Anspruch 1, **dadurch gekennzeichnet, dass** der Anlaufring (42) über Distanzlaschen (43) an dem Behälter (1) befestigt ist.

5. Streuvorrichtung nach einem der Ansprüche 1 bis 3, **dadurch gekennzeichnet, dass** oberhalb des Wälzkörpers (41) ein weiterer sich etwa radial erstreckender Rührfinger (40) angeordnet ist.

6. Streuvorrichtung nach Anspruch 5, **dadurch gekennzeichnet, dass** wenigstens einer der Rührfinger (40) an seinem Ende zu einem Haken abgebogen ist.

7. Streuvorrichtung nach einem der Ansprüche 5 oder 6, **dadurch gekennzeichnet, dass** insgesamt vier Rührfinger (40) in unterschiedlicher Höhe des Rührwerks vorgesehen sind, von denen wenigstens drei nach unten abgebogene Enden aufweisen.

## Claims

1. Spreading device having a spreading material vessel (1) which is supported by a frame and which has at least one metering opening (6) at the bottom, having a metering slide (7) which controls the free cross section of said metering opening, having at least one spreading disc which revolves below the bottom (3) and which is driven by a shaft and which centrifugally accelerates the spreading material and spreads it uniformly over the area on which spreading is to be performed, wherein the shaft, by means of a shaft stub (8), drives a stirring mechanism (32) comprising a stirring rod and being arranged in the vessel for assisting the discharge of the spreading material, wherein the stirring mechanism (32), by means of a base (9) with a tubular lower part (10), engages over the shaft stub (8) and is connected to the latter by means of a bayonet connection (11, 12), **characterized in that** a run-on ring (42) is arranged in the vessel (1) at an approximately central height, and an oval rolling body (41) is arranged on the stirring rod (39), which rolling body, as the stirring rod (39) revolves, rolls on the inner side of the run-on ring (42) and acts via the latter on the walls of the vessel (1).

2. Spreading device according to Claim 1, **characterized in that** the run-on ring (42) is a polygonal, preferably octagonal ring.

3. Spreading device according to Claim 1, **characterized in that** the oval rolling body (41) is formed from an elastic plastic which has resilient characteristics.

4. Spreading device according to Claim 1, **characterized in that** the run-on ring (42) is fastened to the vessel (1) via spacer lugs (43).

5. Spreading device according to one of Claims 1 to 3, **characterized in that** a further, approximately radially extending stirring finger (40) is arranged above the rolling body (41).

6. Spreading device according to Claim 5, **characterized in that** at least one of the stirring fingers (40) is, at the end thereof, bent so as to form a hook.

7. Spreading device according to one of Claims 5 and 6, **characterized in that** a total of four stirring fingers (40) are provided at different heights on the stirring mechanism, at least three of which stirring fingers have downwardly bent ends.

## Revendications

1. Dispositif d'épandage doté d'un réservoir de produit d'épandage (1) supporté par un cadre avec au moins une ouverture de dosage (6) placée du côté du fond, un poussoir de dosage (7) commandant sa section transversale libre, au moins un disque d'épandage entraîné par un arbre tournant au-dessous du fond (3) et accélérant le produit d'épandage de façon centrifuge et le répartissant de façon régulière sur la surface à épandre, l'arbre doté d'un bout d'arbre (8) entraînant un agitateur (32) comprenant une barre agitatrice disposé dans le réservoir et soutenant l'expulsion du produit d'épandage, ladite agitateur engrenant, avec un socle (9) doté d'une partie inférieure (10) en forme de tube, le bout d'arbre (8) et étant reliée à lui par le biais d'une liaison à baïonnette (11, 12), **caractérisé en ce qu'**une bague de lancement (42) est disposée dans le réservoir (1) approximativement à hauteur médiane et qu'un corps de rouleau (41) de forme ovale est disposé au niveau de la barre agitatrice (39), ledit corps roulant au niveau du côté intérieur de la bague de lancement (42) lors de la rotation de la barre agitatrice (39) et agissant via celle-ci sur les parois du réservoir (1).

2. Dispositif d'épandage selon la revendication 1, **caractérisé en ce que** la bague de lancement (42) est une bague polygonale, de préférence octogonale.

3. Dispositif d'épandage selon la revendication 1, **caractérisé en ce que** le corps de rouleau (41) de forme ovale est fabriqué en matière plastique élastique présentant des propriétés de ressort.

4. Dispositif d'épandage selon la revendication 1, **caractérisé en ce que** la bague de lancement (42) est fixée au réservoir (1) par le biais de brides d'espacement (43).

5. Dispositif d'épandage selon l'une quelconque des revendications 1 à 3, **caractérisé en ce qu'**un doigt agitateur (40) supplémentaire s'étendant approximativement dans le plan radial est disposé au-dessus du corps de rouleau (41).

6. Dispositif d'épandage selon la revendication 5, **caractérisé en ce qu'**au moins un des doigts agitateurs (40) est incurvé au niveau de son extrémité de façon à former un crochet.

7. Dispositif d'épandage selon l'une quelconque des revendications 5 ou 6, **caractérisé en ce qu'**au total, quatre doigts agitateurs (40) sont prévus à différentes hauteurs de l'agitateur parmi lesquels au moins trois présentent des extrémités incurvées vers le bas.
